# EUROPEAN PATENT SPECIFICATION

(11) **EP 3 139 005 B1**
(45) Date of publication and mention of the grant of the patent: **03.04.2019**
(21) Application number: 16186865.8
(22) Date of filing: 01.09.2016
(51) Int. Cl.: F01D 11/00, F01D 5/14, F04D 29/32, F04D 29/38, F04D 29/66, F04D 29/70

(54) **GAS TURBINE FAN FAIRING PLATFORM AND METHOD OF FAIRING A ROOT LEADING EDGE OF A FAN BLADE OF A GAS TURBINE ENGINE**
GASTURBINENLÜFTERVERKLEIDUNGSPLATTFORM UND VERFAHREN ZUR VERKLEIDUNG EINER WURZELVORDERKANTE EINER GEBLÄSESCHAUFEL EINES GASTURBINENTRIEBWERKS
PLATE-FORME DE CARÉNAGE DE VENTILATEUR DE TURBINE À GAZ ET PROCÉDÉ DE CARÉNAGE D'UN BORD D'ATTAQUE RACINE D'UNE PALE DE SOUFFLANTE D'UN MOTEUR À TURBINE À GAZ

(30) Priority: 01.09.2015 US 201514841852
(43) Date of publication of application: 08.03.2017
(73) Proprietor: United Technologies Corporation, Farmington, CT 06032 (US)
(72) Inventor: WHITEHURST Sean A., St Louis, MO 63112 (US); WEISSE Michael A., Tolland, CT 06084 (US); FRANKLIN Jordan J., Manchester, CT 06042 (US); McCOMB Patrick James, Cromwell, CT 06416-1170 (US)
(74) Representative: Dehns

(56) References cited:
- EP-A1- 2 644 829
- EP-A2- 2 562 362
- FR-A1- 2 918 409
- US-A1- 2012 301 317
- US-A1- 2013 330 196

## Description

### BACKGROUND

Gas turbine engines typically include platforms near a root of a fan blade. The fan blade extends radially outwardly from the relatively flat platform. Discontinuities between surfaces of the platform and surfaces of the fan blade create turbulence as fluids flow therepast. The industry is always receptive to new devices and methods that can potentially improve efficiencies of gas turbine engines.

EP 2562362 discloses a platform with frangible wings for use between adjacent fan blades joined to a rotor disk.

### BRIEF DESCRIPTION

Disclosed herein is a gas turbine engine with a fan fairing platform comprising: a first platform body having an opening and a protrusion; and a second platform body having an opening; wherein the second platform body abuts the first platform body at a seam extending in a circumferential direction about the gas turbine engine relative to an engine centerline of the gas turbine engine so that the opening of the first platform body and the opening of the second platform body form an opening receptive to a blade, and the first platform body and the second platform body together define a surface; and wherein the protrusion extends outwardly from the surface in a direction that will position the protrusion along a leading edge near a root of the blade.

In addition to one or more of the features described above, or as an alternative, in further embodiments the opening forms a continuous border that surrounds the blade.

In addition to one or more of the features described above, or as an alternative, in further embodiments the first platform body and the second platform body are detachable from one another to allow them to be replaced.

In addition to one or more of the features described above, or as an alternative, in further embodiments the protrusion has a curved surface that blends into the surface of the first platform body.

In addition to one or more of the features described above, or as an alternative, in further embodiments the protrusion serves as a fairing for the blade.

In addition to one or more of the features described above, or as an alternative, in further embodiments at least one of the first platform body and the second platform body is made of at least one of a composite, a polymeric material, and a metal.

In addition to one or more of the features described above, or as an alternative, in further embodiments the material of the first platform body is configured to dampen impacts on the blade.

In addition to one or more of the features described above, or as an alternative, in further embodiments the first platform body seals to the blade.

In addition to one or more of the features described above, or as an alternative, in further embodiments the protrusion is configured to protect the root leading edge of the blade from being contacted directly with a foreign body.

Further disclosed herein is a method of fairing a root leading edge of a fan blade of a gas turbine engine. The method includes positioning the fan fairing platform described above such that the protrusion is adjacent a root leading edge of the fan blade.

In addition to one or more of the features described above, or as an alternative, in further embodiments the method further includes sealing the platform to the fan blade.

In addition to one or more of the features described above, or as an alternative, in further embodiments the method further includes isolating the root leading edge of the fan blade from being struck by objects directly.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 depicts a perspective view of a gas turbine fan fairing platform disclosed herein;
FIG. 2 depicts a perspective view of the turbine fan fairing platform of FIG. 1 positioned around a fan blade;
FIG. 3 depicts an alternate perspective view of the turbine fan fairing platform of FIG. 1 positioned around a fan blade;
FIG. 4 depicts a plurality of the turbine fan fairing platforms of FIG. 1 positioned around a plurality of fan blades in relative positions as they might appear on a gas turbine engine; and
FIG. 5 schematically illustrates a gas turbine engine employing the gas turbine fan fairing platform of FIG. 1.

### DETAILED DESCRIPTION

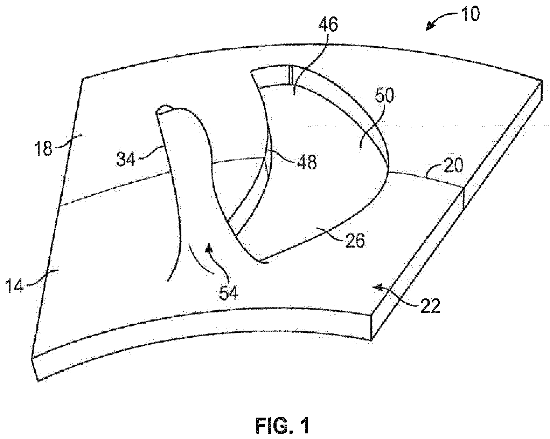

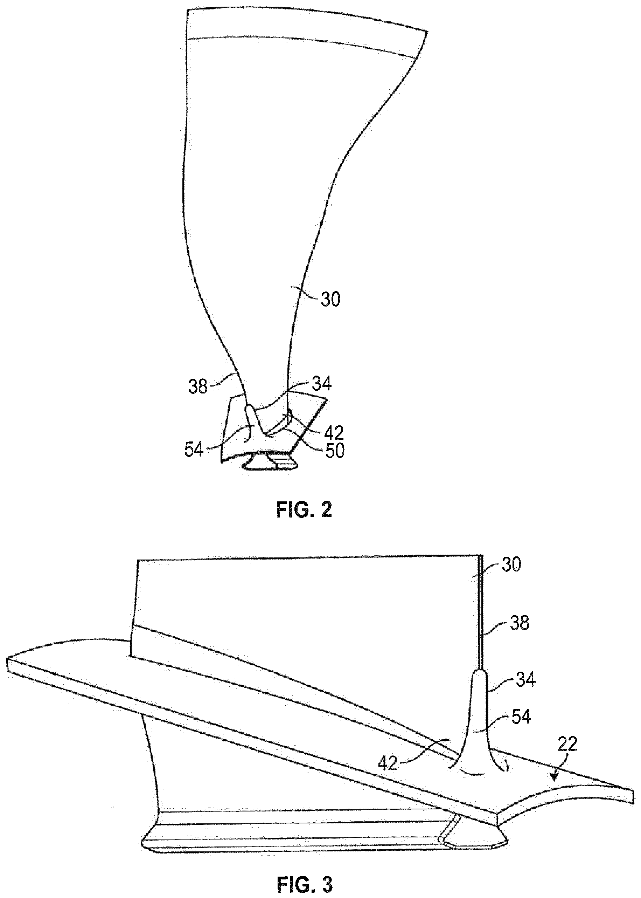

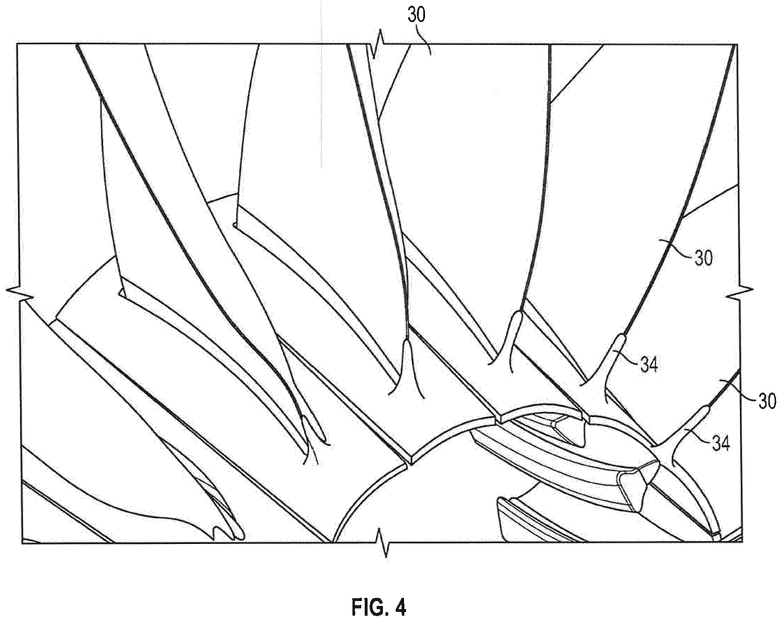

Referring to FIGS. 1-4, an embodiment of a gas turbine fan fairing platform disclosed herein is illustrated generally at 10. The platform 10 includes two bodies 14, 18. A seam 20 shows where the two bodies 14, 18 are come together and extends in a circumferential direction about the gas turbine engine. One of the bodies 14 has an opening 26 receptive to a blade 30 (not shown in FIG. 1) and defines a surface 22. A protrusion 34 extends outward from the surface 22 in a
direction that positions the protrusion 34 proximate a leading edge 38 of the blade 30 near a root 42 of the blade 30.

The two bodies 14, 18 of the platform 10 are attachable such that the opening 26 in the body 14 and an opening 46 in the body 18 form a single larger opening 50 when the bodies 14 and 18 are attached. The opening 50 is sized and shaped to fit around the blade 30 near the root 42 and form a continuous border 48 that surrounds the blade 30. The two bodies 14, 18 are also detachable from one another to allow for replacement in the event that they become damaged, for example.

The protrusion 34 has a curved surface 54 that blends into the surface 22 of the body 14. The protrusion 34 serves as a fairing for the blade 30 and creates a smooth aerodynamic transition between the surface 22 and the blade 30 that is an improvement in comparison to a platform that does not include the protrusion 34. The shape of the surface 54, the protrusion 34 and surface 22 are designed to provide a smooth aerodynamic transition and consequently may have rather complex geometry. The body 14 may be made of a composite or polymeric material to facilitate fabrication of the complex geometry through injection molding, for example. Alternatively, metals such as steel, titanium and aluminum could also be used. The body 14 could also be made of a combination of two or more of the foregoing materials. The needs of each application can influence what material to use. Some applications may favor a lighter material while others a stronger more durable material.

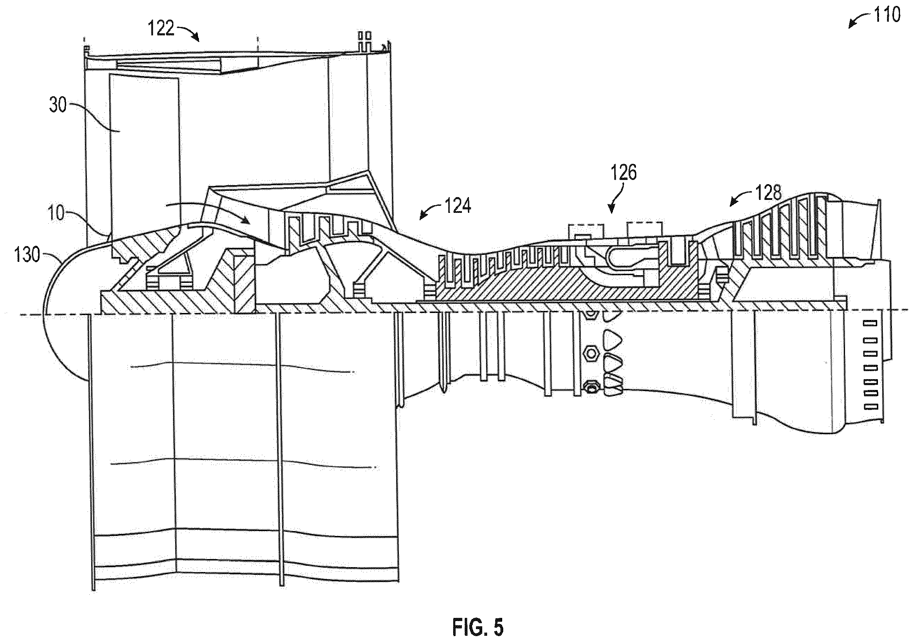

The improved aerodynamics provided by the protrusion 34 allows the root leading edge 38 of the blade 30 to be thicker without sacrificing performance of a gas turbine engine 110 (in FIG. 5 only) employing the gas turbine fairing platform 10. Increased thickness of the root leading edge 38 of the blade 30 makes the blade 30 more durable and less prone to damage when struck since the stress concentration that naturally occurs at the root 42 is lessened by the increased thickness. Additionally, the thicker blade 30 can be stiffer thereby changing the vibrational modes in a direction that should lessen noise and potential damage associated with vibrating at vibrational modes associated with a thinner blade. Furthermore, the protrusion 34 protects the root leading edge 38 of the blade 30 from being contacted directly with a foreign body. And since the material of the body 14 is in some embodiments more resilient than the blade 30 the body 14 can dampen impact from strikes of foreign objects against the protrusion 34. The resiliency of the body 14 can also allow it to act as a seal to the blade 30 and to other structures near the blade 30 such as a nosecone or spinner (not shown) for example.

The foregoing structure allows an operator a method of fairing the root leading edge 38 of the fan blade 30 of the gas turbine engine 110 by positioning the platform 10 such that the protrusion 34 is adjacent the root leading edge 38 of the fan blade 30. In this context the word fairing is being used as a verb to describe improving aerodynamics of whatever the fairing is being done to, which in this case is the root leading edge 38 of the fan blade 30. The method also allows the operator to seal the platform 10 to the fan blade 30 as well as to isolate the root leading edge 38 of the fan blade 30 from being struck by objects directly.

FIG. 5 schematically illustrates a gas turbine engine 110 that can be used to power an aircraft the engine 110 is attached to (not shown), for example. The gas turbine engine 110 is disclosed herein as a two-spool turbofan that generally incorporates a fan section 122, a compressor section 124, a combustor section 126 and a turbine section 128. The fan section 122 drives air along a bypass flowpath while the compressor section 124 drives air along a core flowpath for compression and communication into the combustor section 126 then expansion through the turbine section 128. Although depicted as a turbofan gas turbine engine in the disclosed non-limiting embodiment, it should be understood that the concepts described herein are not limited to use with turbofans as the teachings may be applied to other types of turbine engines including three-spool architectures and even stationary non-vehicle engines. In one embodiment the gas turbine fan fairing platform 10 disclosed herein is positioned about the fan blade 30 adjacent a nose cone 130.

## Claims

1. A gas turbine engine (110) with a fan fairing platform (10) comprising:
a first platform body (14) having an opening (26) and a protrusion (34); and
a second platform body (18) having an opening (46);
wherein the second platform body abuts the first platform body at a seam (20) extending in a circumferential direction about the gas turbine engine relative to an engine centerline of the gas turbine engine so that the opening of the first platform body and the opening of the second platform body form an opening (50) receptive to a fan blade (30), and the first platform body and the second platform body together define a surface (22); and
wherein the protrusion (34) extends outwardly from the surface (22) in a direction that will position the protrusion along a leading edge (38) near a root (42) of the fan blade (30).

2. The gas turbine engine of claim 1, wherein the opening (50) forms a continuous border (48) that surrounds the blade (30).

3. The gas turbine engine of claim 2, wherein the first platform body (14) and the second platform body (18) are detachable from one another to allow them to be replaced.

4. The gas turbine engine of any preceding claim, wherein the protrusion (34) has a curved surface (54) that blends into the surface (22) of the first platform body (14).

5. The gas turbine engine of any preceding claim, wherein the protrusion (34) serves as a fairing for the blade (30).

6. The gas turbine engine of any preceding claim, wherein at least one of the first platform body (14) and the second platform body (18) is made of at least one of a composite, a polymeric material, and a metal.

7. The gas turbine engine of any preceding claim, wherein the material of the first platform body (14) is configured to dampen impacts on the blade (30).

8. The gas turbine engine of any preceding claim, wherein the first platform body (14) is configured to seal to the blade (30).

9. The gas turbine engine of any preceding claim, wherein the protrusion (34) is configured to protect the root leading edge (38) of the blade (30) from being contacted directly with a foreign body.

10. A method of fairing a root leading edge (38) of a fan blade (30) of a gas turbine engine (110), comprising positioning the fan fairing platform (10) of any preceding claim such that the protrusion (34) is adjacent a root leading edge of the fan blade.

11. The method of fairing a root leading edge (38) of a fan blade (30) of a gas turbine engine (110) of claim 10, further comprising sealing the platform (10) to the fan blade.

12. The method of fairing a root leading edge (38) of a fan blade (30) of a gas turbine engine (110) of claim 10 or 11, further comprising isolating the root leading edge of the fan blade from being struck by objects directly.

## Patentansprüche

1. Gasturbinentriebwerk (110) mit einer Lüfterverkleidungsplattform (10), umfassend:
einen ersten Plattformkörper (14) mit einer Öffnung (26) und einem Vorsprung (34); und
einen zweiten Plattformkörper (18) mit einer Öffnung (46);
wobei der zweite Plattformkörper an dem ersten Plattformkörper an einer Naht (20) anliegt, die sich in einer Umfangsrichtung um das Gasturbinentriebwerk im Verhältnis zu einer Triebwerkmittellinie des Gasturbinentriebwerks so erstreckt, dass die Öffnung des ersten Plattformkörpers und die Öffnung des zweiten Plattformkörpers jeweils eine Öffnung (50) zu einer Gebläseschaufel (30) bilden und der erste Plattformkörper und der zweite Plattformkörper zusammen eine Fläche (22) definieren; und
wobei sich der Vorsprung (34) nach außen von der Fläche (22) in einer Richtung erstreckt, welche den Vorsprung entlang einer Vorderkante (38) nahe einer Wurzel (42) der Gebläseschaufel (30) positioniert.

2. Gasturbinentriebwerk nach Anspruch 1, wobei die Öffnung (50) eine durchgängige Begrenzung (48) bildet, welche die Schaufel (30) umgibt.

3. Gasturbinentriebwerk nach Anspruch 2, wobei der erste Plattformkörper (14) und der zweite Plattformkörper (18) voneinander lösbar sind, sodass es möglich ist, sie auszutauschen.

4. Gasturbinentriebwerk nach einem vorhergehenden Anspruch, wobei der Vorsprung (34) eine gekrümmte Fläche (54) aufweist, die sich in die Fläche (22) des ersten Plattformkörpers (14) einfügt.

5. Gasturbinentriebwerk nach einem vorhergehenden Anspruch, wobei der Vorsprung (34) als Verkleidung für die Schaufel (30) dient.

6. Gasturbinentriebwerk nach einem vorhergehenden Anspruch, wobei mindestens einer von dem ersten Plattformkörper (14) und dem zweiten Plattformkörper (18) aus mindestens einem von einem Verbundwerkstoff, einem Polymermaterial und einem Metall gefertigt ist.

7. Gasturbinentriebwerk nach einem vorhergehenden Anspruch, wobei das Material des ersten Plattformkörpers (14) dazu ausgelegt ist, Stöße auf die Schaufel (30) zu dämpfen.

8. Gasturbinentriebwerk nach einem vorhergehenden Anspruch, wobei der erste Plattformkörper (14) dazu ausgelegt ist, gegen die Schaufel (30) abzudichten.

9. Gasturbinentriebwerk nach einem vorhergehenden Anspruch, wobei der Vorsprung (34) dazu ausgelegt ist, die Wurzelvorderkante (38) der Schaufel (30) davor zu schützen, direkt von einem Fremdkörper berührt zu werden.

10. Verfahren zum Verkleiden einer Wurzelvorderkante (38) einer Gebläseschaufel (30) eines Gasturbinentriebwerks (110), umfassend Positionieren der Lüfterverkleidungsplattform (10) nach einem vorhergehenden Anspruch derart, dass der Vorsprung (34) zu einer Wurzelvorderkante der Gebläseschaufel benachbart ist.

11. Verfahren zum Verkleiden einer Wurzelvorderkante (38) einer Gebläseschaufel (30) eines Gasturbinentriebwerks (110) nach Anspruch 10, ferner umfassend Abdichten der Plattform (10) gegen die Gebläseschaufel.

12. Verfahren zum Verkleiden einer Wurzelvorderkante (38) einer Gebläseschaufel (30) eines Gasturbinentriebwerks (110) nach Anspruch 10 oder 11, ferner umfassend Isolieren der Wurzelvorderkante der Gebläseschaufel dagegen, direkt von Objekten getroffen zu werden.

## Revendications

1. Moteur à turbine à gaz (110) avec une plate-forme de carénage de ventilateur (10) comprenant :
un premier corps de plate-forme (14) ayant une ouverture (26) et une saillie (34) ; et
un second corps de plate-forme (18) ayant une ouverture (46) ;
dans lequel le second corps de plate-forme vient en butée contre le premier corps de plate-forme au niveau d'une jointure (20) s'étendant dans une direction circonférentielle autour du moteur à turbine à gaz par rapport à un axe moteur du moteur à turbine à gaz de sorte que l'ouverture du premier corps de plate-forme et l'ouverture du second corps de plate-forme forment une ouverture (50) pouvant recevoir une pale de soufflante (30), et le premier corps de plate-forme et le second corps de plate-forme définissent ensemble une surface (22) ; et
dans lequel la saillie (34) s'étend vers l'extérieur depuis la surface (22) dans une direction qui va situer la saillie le long d'un bord d'attaque (38) à proximité d'une racine (42) de la pale de soufflante (30).

2. Moteur à turbine à gaz selon la revendication 1, dans lequel l'ouverture (50) forme une bordure continue (48) qui entoure la pale (30).

3. Moteur à turbine à gaz selon la revendication 2, dans lequel le premier corps de plate-forme (14) et le second corps de plate-forme (18) peuvent être détachés l'un de l'autre pour leur permettre d'être remplacés.

4. Moteur à turbine à gaz selon une quelconque revendication précédente, dans lequel la saillie (34) présente une surface incurvée (54) qui fusionne avec la surface (22) du premier corps de plate-forme (14).

5. Moteur à turbine à gaz selon une quelconque revendication précédente, dans lequel la saillie (34) sert de carénage pour la pale (30).

6. Moteur à turbine à gaz selon une quelconque revendication précédente, dans lequel au moins un parmi le premier corps de plate-forme (14) et le second corps de plate-forme (18) est fait d'au moins un parmi un composite, un matériau polymère, et un métal.

7. Moteur à turbine à gaz selon une quelconque revendication précédente, dans lequel le matériau du premier corps de plate-forme (14) est configuré pour amortir les impacts sur la pale (30) .

8. Moteur à turbine à gaz selon une quelconque revendication précédente, dans lequel le premier corps de plate-forme (14) est configuré pour assurer l'étanchéité de la pale (30).

9. Moteur à turbine à gaz selon une quelconque revendication précédente, dans lequel la saillie (34) est configurée pour protéger le bord d'attaque racine (38) de la pale (30) et l'empêcher d'entrer en contact direct avec un corps étranger.

10. Procédé pour caréner un bord d'attaque racine (38) d'une pale de soufflante (30) d'un moteur à turbine à gaz (110), comprenant le fait de positionner la plate-forme de carénage de ventilateur (10) selon une quelconque revendication précédente de sorte que la saillie (34) est adjacente à un bord d'attaque racine de la pale de soufflante.

11. Procédé pour caréner un bord d'attaque racine (38) d'une pale de soufflante (30) d'un moteur à turbine à gaz (110) selon la revendication 10, comprenant en outre le fait d'assurer l'étanchéité entre la plateforme (10) et la pale de soufflante.

12. Procédé pour caréner un bord d'attaque racine (38) d'une pale de soufflante (30) d'un moteur à turbine à gaz (110) selon la revendication 10 ou 11, comprenant en outre le fait de protéger le bord d'attaque racine de la pale de soufflante pour l'empêcher d'être heurtée directement par des objets.
